# EUROPEAN PATENT SPECIFICATION

(11) **EP 2 795 205 B1**
(45) Date of publication and mention of the grant of the patent: **25.09.2019**
(21) Application number: 11802733.3
(22) Date of filing: 21.12.2011
(51) Int. Cl.: F25B 5/02, F25B 49/02, F25D 11/02

(54) **METHOD OF OPERATING REFRIGERATION SYSTEM AND REFRIGERATION SYSTEM**
VERFAHREN ZUM BETREIBEN EINES KÜHLSYSTEMS UND KÜHLSYSTEM
PROCÉDÉ DE COMMANDE D'UN SYSTÈME DE RÉFRIGÉRATION ET SYSTÈME DE RÉFRIGÉRATION ASSOCIÉ

(43) Date of publication of application: 29.10.2014
(73) Proprietor: Electrolux Home Products Corporation N.V., 1130 Brussels (BE)
(72) Inventor: ASCHAN, Andreas, S-129 39 Hägersten (SE); FURBERG, Richard, S-184 42 Åkersbega (SE)
(74) Representative: Electrolux Group Patents
(86) International application number: PCT/EP2011/073616
(87) International publication number: WO 2013/091691

(56) References cited:
- EP-A1- 2 124 000
- EP-A2- 1 376 031
- WO-A2-2009/061120
- GB-A- 2 083 928

## Description

### TECHNICAL FIELD

The present invention relates to a method of operating a refrigeration system comprising two evaporators and to a refrigeration system comprising two separate cooled compartments.

### BACKGROUND

A particular kind of refrigeration system, as used in connection with two cooled foodstuff storage compartments comprises: two evaporators, a compressor, a condenser, and at least one expansion arrangement, such as a capillary tube, interconnected by conduits. A first compartment is in thermal communication with a first evaporator and cooled to maintain an above freezing point temperature therein. A second compartment is in thermal communication with a second evaporator and cooled to maintain a below freezing point temperature therein. The first and second compartments may be referred to as a fridge and a freezer, respectively, and typically may be provided with separate doors.

A refrigerant circulates in the refrigeration system while the compressor runs, compressing the gaseous refrigerant coming from the evaporator. As the refrigerant circulates, the gaseous refrigerant is cooled and condenses to a liquid state in the condenser, which is arranged outside of the two compartments. Thereafter, the liquid refrigerant is subjected to a pressure drop in the at least one expansion arrangement and evaporates from the liquid state in the first or second evaporator and cools the respective first and second compartments.

US 5465591 discloses a refrigeration appliance having a freezer compartment and a fresh food compartment. A first evaporator operating at a low pressure level is provided in connection with the freezer compartment and a second evaporator operating a high pressure level is provided in connection with the fresh food compartment. A compressor and a condenser are connected via a valve arrangement and capillary tubes to the first and second evaporators. By means of the valve arrangement, one of two connections from the condenser to one of the evaporators may be opened at a time. Further, in an off-cycle mode and in a pump-out cycle mode the valve arrangement closes both connections from the condenser to the two evaporators. In several operating situations a pressure equalization is initiated when the compressor is in an off condition, allowing refrigerant to migrate from the condenser to the second evaporator. In the refrigeration appliance, both a fresh food cooling mode and a freezer cooling mode are initiated and terminated in response to a control signal representing a temperature condition of the fresh food compartment and the freezer compartment, respectively. As apparent from an illustration of compressor power usage in the refrigeration appliance, initiation and termination of the two cooling modes may occur at any point in time when the temperature condition in a relevant compartment so directs. Energy consumption of the refrigerator appliance may be reduced by storing thermal energy in a thermal storage or phase change material.

EP 727628 discloses a control device for controlling temperature in a single compartment refrigerator and a method of controlling the temperature in a single compartment refrigerator. The purpose is to provide a control device and a method of controlling the temperature in refrigerators by means of which the cooling source may be controlled to minimize the energy consumption of the refrigerator. This is achieved by means of a control algorithm in which a requirement variable is formed. The requirement variable formed indicates a ratio of the switch-on duration of the cooling source to the switch-off duration of the cooling source. Furthermore, an actual temperature averaged over time is used as the actual temperature for forming a differential between a set-point temperature and an actual temperature. EP 2 124 000 discloses a refrigeration system and a method of operating the refrigeration system. The refrigeration system comprises: a first evaporator, a second evaporator, a compressor, a condenser, a valve arrangement. A first and a second refrigeration circuit are defined in the refrigeration circuit. The method comprises: maintaining a first connection open and a second connection closed during a first duration, maintaining the second connection open and the first connection closed during a second duration, and maintaining the first and second connections closed during a third duration.

During a compressor cycle, i.e. one on-period and one off-period of a compressor, a refrigeration system may be subjected to cyclic losses. The losses are due to: 1. Liquid refrigerant, instead of gaseous refrigerant, being extracted from the evaporator at the beginning of the on-period of the compressor. 2. Gaseous refrigerant being pumped through the expansion arrangement in the form of a capillary tube before a liquid seal is formed at the beginning of the on-period. 3. Improperly charged condenser and evaporator before equilibrium has been established in circulation of the refrigerant in the refrigeration system during the on-period. 4. Gaseous and liquid refrigerant entering the evaporator through the expansion arrangement during the off-period.

In refrigeration systems running with long compressor cycle times, cyclic losses are negligible in comparison with the total energy consumption of the refrigeration system. However, in refrigeration systems running with short cycle times the cyclic losses may be responsible for a considerable portion of the total energy consumption of the refrigeration system.

For a refrigeration system a coefficient of performance (COP) is the ratio of the heat removed from the cooled compartment to input work: COP = |Q| / W. Where Q is the heat removed from the cooled compartment and W is the work consumed by e.g. the compressor. At the beginning of an on-period of the compressor a refrigeration system has a higher COP than when the compressor has been running for a while. This is due to the pressure difference over the compressor increasing as the on-period progresses. Since the pressure in the condenser is increasing and the pressure in the evaporator is decreasing as the material in the condenser (often steel, aluminium or copper) is being heated and the material in the evaporator (often aluminium or copper) is being cooled. That is, the refrigeration system is operating the most energy efficient after start-up of the compressor when equilibrium has been established in circulation of the refrigerant in the refrigeration system.

In refrigerators, lowering energy consumption has been a goal for years. For instance the EU Directive 92/75/EC establishes an energy consumption labeling scheme applicable inter alia for refrigerators. A good energy consumption rating is thus aspired by refrigerator manufacturers. The control device and method of EP 727628 do not take account of cyclic losses in the one compartment refrigeration system. The two compartment refrigeration appliance of US 5465591 is subject to at least some of the cyclic losses mentioned above, e.g. due to the pressure equalization employed. Furthermore, the refrigeration appliance does not take account of the decreasing COP during the on-period of the compressor.

Thus, energy consumption in a refrigeration system comprising two compartments and two evaporators is comparatively high.

### SUMMARY

An object of the present invention is to improve energy consumption in a refrigerator comprising two compartments and two evaporators.

According to an aspect of the invention, the object is achieved by a method of operating a refrigeration system. The refrigeration system comprises:
- a first evaporator adapted to be arranged in thermal communication with a first compartment to be cooled,
- a second evaporator adapted to be arranged in thermal communication with a second compartment to be cooled,
- a compressor,
- a condenser,
- a valve arrangement adapted to open and close a first connection leading from the condenser to the first evaporator and to open and close a second connection leading from the condenser to the second evaporator,
- a first expansion arrangement arranged in the first connection, and
- a second expansion arrangement arranged in the second connection.

In the refrigeration system:
- a first refrigeration circuit comprises the compressor, the condenser, the valve arrangement, the first expansion arrangement, and the first evaporator interconnected by conduits, and
- a second refrigeration circuit comprises the compressor, the condenser, the valve arrangement, the second expansion arrangement, the second evaporator and a check valve interconnected by conduits.

The method comprises:
- establishing a first cooling requirement of the first compartment based on the differential between a first set-point temperature and an actual temperature in the first compartment averaged over time,
- establishing a second cooling requirement of the second compartment based on the differential between a second set-point temperature and an actual temperature in the second compartment averaged over time,
- forming a first requirement variable relating to the first cooling requirement of the first compartment, the first requirement variable being a first ratio between a switch-on duration of the compressor with refrigerant circulating through the first refrigeration circuit and a duration parameter comprising a switch-off duration of the compressor,
- forming a second requirement variable relating to the second cooling requirement of the second compartment, the second requirement variable being a second ratio between a switch-on duration of the compressor with refrigerant circulating through the second refrigeration circuit and the duration parameter comprising the switch-off duration of the compressor,
- establishing a first duration during which the compressor is switched on and refrigerant circulates through the first refrigeration circuit on the basis of the first requirement variable,
- establishing a second duration during which the compressor is switched on and refrigerant circulates through the second refrigeration circuit on the basis of the second requirement variable,
- establishing a third duration during which the compressor is switched off and/or the first and second connections are closed, on the basis of the first and/or second requirement variable,
- switching on and switching off the compressor according to the first, second and third durations,
- maintaining the first refrigeration circuit open and the second refrigeration circuit closed by means of the valve arrangement during the first duration,
- maintaining the second refrigeration circuit open and the first refrigeration circuit closed by means of the valve arrangement during the second duration, and
- maintaining the first and second connections closed by means of the valve arrangement during the third duration.

Since according to the method for the compressor is controlled based on the first, second, and third durations there is provided for the refrigeration system to be controlled with an optimized COP. Furthermore, since according to the method the first and second connections are maintained closed during the third duration there is provided for low cyclic losses in the refrigeration system. As a result the above mentioned object is achieved.

A refrigerant of the refrigeration system may circulate in the refrigeration system while the compressor is running. The refrigerant may circulate through one of the first and second refrigeration circuits at a time. As the refrigerant circulates, the gaseous refrigerant coming from the condenser is cooled and condenses to a liquid state in the condenser. The liquid refrigerant is subjected to a pressure drop in the first or second expansion arrangement and cools the respective first and second compartments as it evaporates from the liquid state in the first or second evaporator. The compressor may be switched off during the third duration. The refrigeration system may comprise a control system, which may be adapted to perform the method. The control system may be adapted to control the valve arrangement and the compressor. The control system may comprise temperature sensors arranged in thermal communication with the first and second compartments, respectively.

The method may be adapted to maintain an above freezing point temperature of water in the first compartment and to maintain a below freezing point temperature of water in the second compartment. Accordingly, the pressure in the refrigeration system is higher when the refrigerant circulates through the first refrigeration circuit than when the refrigerant circulates through the second refrigeration circuit. The first and second compartments may be provided with separate doors. The refrigeration system may be adapted for domestic foodstuff storing.

According to embodiments, the method may comprise:
- dividing the first duration into at least two first time portions,
- dividing the third duration into at least two third time portions,
- alternating the at least two first time portions with at least one of the at least two third time portions, and
- following one of the at least two third time portions with the second duration. In this manner the first cooling requirement of the first compartment may be fulfilled during the at least two time portions. The COP of the refrigeration system may thus be further improved.

In these embodiments, the said maintaining the first refrigeration circuit open and the second refrigeration circuit closed during the first duration thus, may comprise maintaining the first refrigeration circuit open and the second refrigeration circuit closed during the at least two first time portions, and therebetween, maintaining the first and second connections closed by means of the valve arrangement and the compressor shut off during one of the at least two third time portions. The at least two first time portions alternated with the at least two third time portions and the second duration make up a cooling sequence for the first and second compartments of the refrigeration system. Such a cooling sequence has a total duration of the collective length of the first, second and third durations.

According to embodiments the said alternating the at least two first time portions with at least one of the at least two third time portions may comprise three steps in sequence:
- switching on the compressor and maintaining the first connection open and the second connection closed by means of the valve arrangement during one of the at least two first time portions,
- switching off the compressor and maintaining the first and second connections closed by means of the valve arrangement during one of the at least two third time portions, and
- switching on the compressor and maintaining the first connection open and the second connection closed by means of the valve arrangement during one of the at least two first time portions. The said following one of the at least two third time portions with the second duration may comprise two steps in sequence:
- switching off the compressor and maintaining the first and second connections closed by means of the valve arrangement during one of the at least two third time portions, and
- switching on the compressor and maintaining the second connection open and the first connection closed by means of the valve arrangement during the second duration.

According to embodiments the duration parameter comprising the switch-off duration of the compressor, may further comprise the first and/or second switch-on durations, and/or a duration during with the first and second connections are closed. Thus, the first and second ratios may be related to a total time of the cooling sequence.

According to embodiments the refrigeration system may comprise the first and second compartments and the compartments may be adapted for domestic foodstuff storing.

According to embodiments the first duration, the second duration, and the third duration may collectively have a length of between 10 - 100 minutes. Accordingly, the cooling sequence may have a length of between 10 - 100 minutes.

According to embodiments the compressor may be adapted to provide a cooling capacity of between 10 - 500 W according to ASHRAE LBP or HMBP standard.

According to a further aspect of the invention the object is achieved by a refrigerator comprising a first compartment and a second compartment cooled by a refrigeration system controlled by a control system, wherein the refrigeration system comprises:
- a first evaporator adapted to be arranged in thermal communication with the first compartment,
- a second evaporator adapted to be arranged in thermal communication with the second compartment,
- a compressor,
- a condenser,
- a valve arrangement adapted to open and close a first connection leading from the condenser to the first evaporator and to open and close a second connection leading from the condenser to the second evaporator,
- a first expansion arrangement arranged in the first connection, and a second expansion arrangement arranged in the second connection.

In the refrigeration system:
- a first refrigeration circuit comprises the compressor, the condenser, the valve arrangement, the first expansion arrangement, and the first evaporator interconnected by conduits, and
- a second refrigeration circuit comprises the compressor, the condenser, the valve arrangement, the second expansion arrangement, the second evaporator and a check valve interconnected by conduits. The control system is adapted:
- to establish a first cooling requirement of the first compartment based on the differential between a first set-point temperature and an actual temperature in the first compartment averaged over time,
- to establish a second cooling requirement of the second compartment based on the differential between a second set-point temperature and an actual temperature in the second compartment averaged over time,
- to forming a first requirement variable relating to the first cooling requirement of the first compartment, the first requirement variable being a first ratio between a switch-on duration of the compressor with refrigerant circulating through the first refrigeration circuit and a duration parameter comprising a switch-off duration of the compressor,
- to form a second requirement variable relating to the second cooling requirement of the second compartment, the second requirement variable being a second ratio between a switch-on duration of the compressor with refrigerant circulating through the second refrigeration circuit and the duration parameter comprising the switch-off duration of the compressor,
- to establish a first duration during which the compressor is switched on and refrigerant circulates through the first refrigeration circuit on the basis of the first requirement variable,
- to establish a second duration during which the compressor is switched on and refrigerant circulates through the second refrigeration circuit on the basis of the second requirement variable,
- to establish a third duration during which the compressor is switched off and/or the first and second connections are closed on the basis of the first and/or second requirement variable,
- to switch on and switch off the compressor according to the first, second and third durations,
- to maintain the first connection open and the second connection closed by means of the valve arrangement during the first duration,
- to maintain the second connection open and the first connection closed by means of the valve arrangement during the second duration, and
- to maintain the first and second connections closed by means of the valve arrangement during the third duration.

According to embodiments the first compartment may be adapted for refrigerated domestic foodstuff storing at a temperature above 0 degrees Celsius and the second compartment may be adapted for refrigerated domestic foodstuff storing at a refrigerated temperature below 0 degrees Celsius.

According to embodiments the compressor may be a single speed compressor adapted to run at a constant speed during the first duration and the second duration.

According to embodiments the compressor may be a variable speed compressor adapted to run at variable speed during the first duration and the second duration. Further features of, and advantages with, the present invention will become apparent when studying the appended claims and the following detailed description. Those skilled in the art will realize that different features of the present invention may be combined to create embodiments other than those described in the following, without departing from the scope of the present invention, as defined by the appended claims.

### BRIEF DESCRIPTION OF THE DRAWINGS

The various aspects of the invention, including its particular features and advantages, will be readily understood from the following detailed description and the accompanying drawings, in which:
Fig. 1 illustrates schematically a refrigerator and a refrigeration system according to embodiments,
Fig. 2 illustrates a method of operating a refrigeration system according to embodiments, and
Fig. 3 illustrates an embodiment of alternating at least two first time portions with at least one of the at least two third time portions.

### DETAILED DESCRIPTION

The present invention will now be described more fully with reference to the accompanying drawings, in which example embodiments are shown. However, this invention should not be construed as limited to the embodiments set forth herein. Disclosed features of example embodiments may be combined as readily understood by one of ordinary skill in the art to which this invention belongs. Like numbers refer to like elements throughout. Well-known functions or constructions will not necessarily be described in detail for brevity and/or clarity.

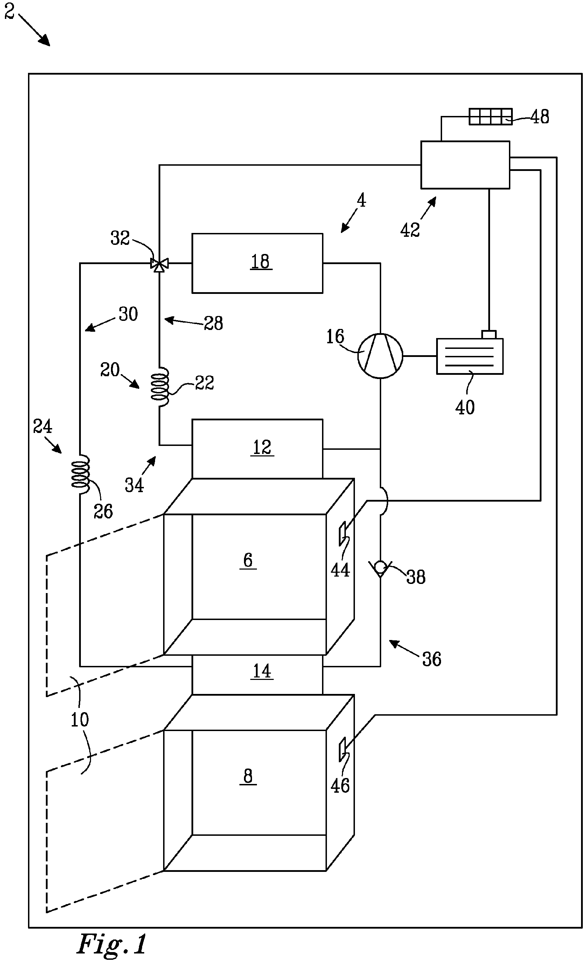

**Fig. 1** illustrates schematically a refrigerator **2** and a refrigeration system **4** according to embodiments. The refrigerator 2 comprises the refrigeration system 4, a first compartment **6,** which is refrigerated to a temperature level above freezing point, i.e. above 0 degrees Celsius. The refrigerator 2 further comprises a second compartment **8,** which is refrigerated to a temperature level below freezing point, i.e. below 0 degrees Celsius. The first and second compartments 6, 8 may be used for storing foodstuff and may be provided with doors **10** (indicated with broken lines in Fig. 1). The refrigeration system 4 comprises a first evaporator **12** arranged in thermal communication with the first compartment 6, a second evaporator **14** arranged in thermal communication with the second compartment 8, a compressor **16,** and a condenser **18.** The refrigeration system **4** further comprises a first expansion arrangement **20** comprising a first capillary tube **22** and a second expansion arrangement **24** comprising a second capillary tube **26.** Conduits are arranged to interconnect the mentioned components of the refrigeration system 4. A first connection **28** leads from the condenser 18 to the first evaporator 12 and a second connection **30** leads from the condenser 18 to the second evaporator 14. The components of the refrigeration system 4 are filled with a refrigerant.

A valve arrangement **32** is arranged between the condenser 18 and the first and second connections 28, 30. The valve arrangement 32 is adapted to open and close the first and second connections 28, 30. A first refrigeration circuit **34** comprising the compressor 16, the condenser 18, the valve arrangement 32, the first connection 28, the first expansion arrangement 20, and the first evaporator 12 interconnected by conduits. A second refrigeration circuit **36** comprises the compressor 16, the condenser 18, the valve arrangement 32, the second expansion arrangement 24, the second evaporator 14, and a check valve **38** interconnected by conduits. By means of the valve arrangement 32 opening and closing the first and second connections 28, 30, the refrigerant is directed to circulate through either the first or the second refrigeration circuit 34, 36.

Circulation of the refrigerant is driven by a pressure difference between the condenser 18 and a relevant of the first and second evaporators 12, 14. The pressure difference is created by the compressor 16, compressing gaseous refrigerant which has evaporated from liquid refrigerant in the first or second evaporator 12, 14. The gaseous refrigerant is cooled and condenses to a liquid state in the first or second condenser 12, 14. In a relevant of the first and second expansion arrangement 20, 24 the liquid refrigerant is subjected to a pressure drop to thereafter evaporate from the liquid state in the relevant first or second evaporator 12, 14. The first and second evaporators 12, 14 cool the respective first and second compartments 6, 8 as the refrigerant evaporates in the first or second evaporator 12, 14.

For achieving an above freezing point refrigeration temperature in the first compartment 6 the refrigerant evaporates at a higher temperature in the first evaporator 12 than in the second evaporator 14 where the refrigeration temperature is below freezing point. Accordingly, during circulation of the refrigerant through the first refrigeration circuit 34, a higher pressure prevails in the refrigeration system than during circulation of refrigerant through the second refrigeration circuit 36. During circulation of refrigerant through the first refrigeration circuit 34, the check valve 38 prevents gaseous refrigerant from the first refrigeration circuit 34 to enter the second evaporator 14.

In addition to opening each of the first and second refrigeration circuits 34, 36, one at a time, and closing the other of the first and second refrigeration circuits 34, 36, the valve arrangement 32 may keep both the first and second refrigeration circuits 34, 36 closed at the same time.

An electric motor **40** drives the compressor 16. A control system **42** is arranged to control the operation of the refrigeration system 4. The control system 42 may comprise a microprocessor programmed to control the operation of the refrigeration system 4. Alternatively, the control system **42** may comprise discrete electric components connected to control the refrigeration system 4. The control system **42** comprises a first temperature sensor **44** arranged in thermal communication with the first compartment 6 and a second temperature sensor **46** arranged in thermal communication with the second compartment 8. The control system 42 is connected to the electric motor 24 for controlling the compressor 16, and to the valve arrangement 32 for controlling the valve arrangement 32. Control parameters of the refrigeration system 4 may be preset in the control system 42. Alternatively, at least some control parameters may be set via a control panel **48.**

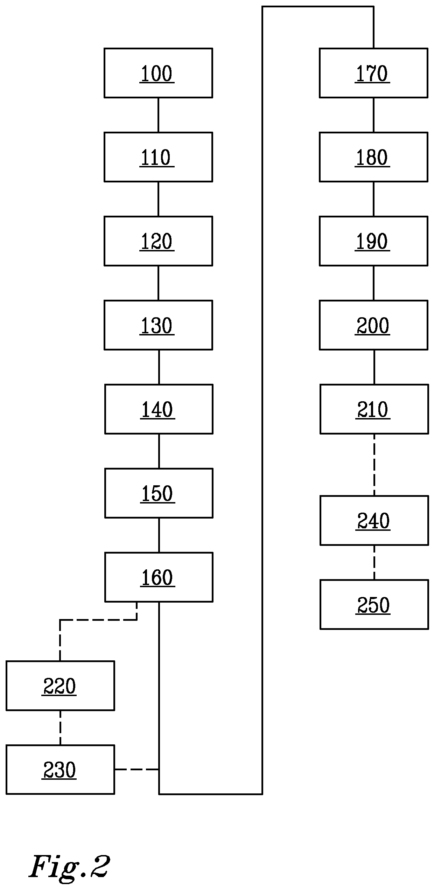

**Fig. 2** illustrates a method of operating a refrigeration system according to embodiments. The refrigeration system may be a refrigeration system 4 as described in connection with Fig. 1. The method comprises:
- Establishing 100 a first cooling requirement of the first compartment 6 based on the differential between a first set-point temperature and an actual temperature in the first compartment 6 averaged over time.
- Establishing 110 a second cooling requirement of the second compartment 8 based on the differential between a second set-point temperature and an actual temperature in the second compartment 8 averaged over time.

The actual temperature averaged over time in the first compartment 6 and in the second compartment 8 may be averaged over a time period of predefined length. The time period of predefined length may be the same for the first and second compartments or it may differ for the first and second compartments. The method further comprises:
- Forming 120 a first requirement variable relating to the first cooling requirement of the first compartment 6. The first requirement variable is a first ratio between a switch-on duration of the compressor 16 with refrigerant circulating through the first refrigeration circuit 34 and a duration parameter comprising a switch-off duration of the compressor 16.
- Forming 130 a second requirement variable relating to the second cooling requirement of the second compartment 8. The second requirement variable is a second ratio between a switch-on duration of the compressor 16 with refrigerant circulating through the second refrigeration circuit 36 and the duration parameter comprising the switch-off duration of the compressor 16.
- Establishing 140 a first duration during which the compressor 16 is switched on and refrigerant circulates through the first refrigeration circuit 34 on the basis of the first requirement variable.
- Establishing 150 a second duration during which the compressor 16 is switched on and refrigerant circulates through the second refrigeration circuit 36 on the basis of the second requirement variable.
- Establishing 160 a third duration during which the compressor 16 is switched off and/or the first and second connections are closed, on the basis of the first and/or second requirement variable.
- Switching on 170 and switching off 180 the compressor 16 according to the first, second and third durations.
- Maintaining 190 the first connection 28 open and the second connection 30 closed by means of the valve arrangement 32 during the first duration,
- Maintaining 200 the second connection 30 open and the first connection 28 closed by means of the valve arrangement 32 during the second duration.
- Maintaining 210 the first and second connections 28, 30 closed by means of the valve arrangement 32 during the third duration.

The method may further comprise:
- dividing 220 the first duration into at least two first time portions,
- dividing 230 the third duration into at least two third time portions,
- alternating 240 the at least two first time portions with at least one of the at least two third time portions, and
- following 250 one of the at least two third time portions with the second duration.

In this manner the first and third durations may be subdivided into time portions. The time portions may be alternated. Accordingly, the switching on 170 and switching off 180 of the compressor, the maintaining 190 the first connection 28 open and the second connection 30 closed, as well as the maintaining 210 the first and second connections 28, 30 closed by means of the valve arrangement 32 during the third duration are subdivided into time portions and alternated. Thanks to such alternated operation of the compressor 16 a high Coefficient of Performance (COP) may be achieved in the refrigeration system 4, a refrigeration system 4 which comprises one condenser 18 and two evaporators 12, 14.

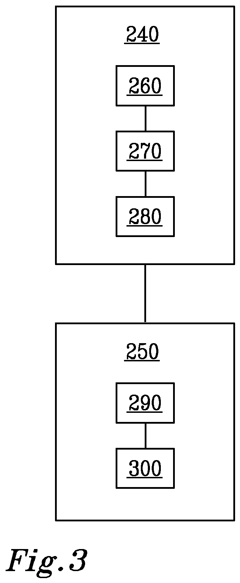

**Fig. 3** illustrates an embodiment of alternating 240 the at least two first time portions with at least one of the at least two third time portions mentioned in connection with Fig. 2. The alternating 240 may comprise three steps in sequence:
- Switching on 260 the compressor 16 and maintaining the first connection 28 open and the second connection 30 closed by means of the valve arrangement 32 during one of the at least two first time portions.
- Switching off 270 the compressor 16 and maintaining the first and second connections 28, 30 closed by means of the valve arrangement 32 during one of the at least two third time portions.
- Switching on 280 the compressor 16 and maintaining the first connection 28 open and the second connection 30 closed by means of the valve arrangement 32 during one of the at least two first time portions. Further, the following 250 one of the at least two third time portions with the second duration mentioned in connection with embodiments of Fig. 2 may comprise two steps in sequence:
- Switching off 290 the compressor 16 and maintaining the first and second connections 28, 30 closed by means of the valve arrangement 32 during one of the at least two third time portions.
- Switching on 300 the compressor 16 and maintaining the second connection 30 open and the first connection 28 closed by means of the valve arrangement 32 during the second duration.

The duration parameter comprising the switch-off duration of the compressor 16 utilized in the method as illustrated in Figs. 2 and 3 may further comprise the first and/or second switch-on durations, and/or a duration during with the first and second connections are closed. The first duration, the second duration, and the third duration collectively may have a length of between 10 - 100 minutes. The compressor may be adapted to provide a cooling capacity of between 10 - 500 W according to ASHRAE LBP or HMBP standard (at 55 degrees Celsius condensing temperature and - 23,3 degrees Celsius evaporating temperature). More specifically, in some applications the compressor 16 may be adapted to provide a cooling capacity of between 20 - 300 W according to ASHRAE LBP or HMBP standard.

According to embodiments, the method may comprise operation of a refrigeration system such that steps in the method are performed in a sequence. The sequence of the steps may be predetermined. A time interval for each step may be calculated according to embodiments of the method discussed in connection with Figs. 2 and 3. Accordingly, a time interval may correspond to a first, second, or third duration and/or to a first or third time portion. Thus, the method provides for an energy optimized operation of a refrigeration system 4 comprising a first and a second evaporator 12, 14 with a predetermined number of cooling steps for the first evaporator 12 and a predetermined number of cooling steps for the second evaporator 14. This is advantageous from a COP point of view. Furthermore, the valve arrangement 32 is arranged to maintain the first and second refrigeration circuits 34, 36 closed during the third time period accordingly, cyclic losses are minimized.

In connection with Table 1 below, a non-limiting exemplary method according to embodiments is illustrated. The method may be applied to a refrigeration system 4 as illustrated in Fig. 1, and illustrates an exemplary implementation of the method discussed in connection with Figs. 2 and 3.

The method is operated with three cooling steps for first evaporator 12 cooling the first compartment 6 and one cooling step for the second evaporator 14 cooling the second compartment 8. Accordingly, the method comprises three first time portions alternated with third time portions and one second duration.

**Table 1**

| **Step No.** | **Compressor 16** | **Position of Valve Arrangement 32** | | **Time Interval Length** |
|---|---|---|---|---|
| | | **To First Evaporator 12** | **To Second Evaporator 14** | |
| 1 | ON | OPEN | CLOSE | t_1 |
| 2 | OFF | CLOSE | CLOSE | t_2 |
| 3 | ON | OPEN | CLOSE | t_3 |
| 4 | OFF | CLOSE | CLOSE | t_4 |
| 5 | ON | OPEN | CLOSE | t_5 |
| 6 | OFF | CLOSE | CLOSE | t_6 |
| 7 | ON | CLOSE | OPEN | t_7 |
| | | | | |
| 8 | OFF | CLOSE | CLOSE | t_8 |
| 9 | ON | CLOSE | CLOSE | t_9 |
| 10 | OFF | CLOSE | CLOSE | t_10 |

A first duration, during which the compressor 16 is switched on and refrigerant circulates through the first refrigeration circuit 34, comprises the Steps Nos. 1, 3, and 5. Accordingly, each of Steps Nos. 1, 3, and 5 form a first time portion. The first duration has a length of t_1 + t_3 + t_5 and the first time portions each have a length of t_1, t_3, and t_5, respectively. The first time portion lengths t_1, t_3, and t_5 may be of same length or different lengths.

A second duration, during which the compressor 16 is switched on and refrigerant circulates through the second refrigeration circuit 36, comprises Step No. 7. The second duration has a length of t_7.

A third duration, during which the compressor 16 is switched off, comprises Steps Nos. 2, 4, and 6. Accordingly, each of Steps Nos. 2, 4, and 6 form a third time portion. The third duration has a length of t_2 + t_4 + t_6 and the third time portions each have a length of t_2, t_4, and t_6, respectively. The third time portion lengths t_2, t_4, and t_6 may be of same length or different lengths.

Step 9 comprises a draining operation, during which refrigerant is drawn from the second evaporator 14 by means of the compressor 16. The valve arrangement 32 maintains both the first and second connections 28, 30 to the first and second evaporators 12, 14 closed during Step 9 while the compressor 16 is running. Thus, the pressure in the refrigeration system 4 is raised from a low level, which prevails during circulation of the refrigerant through the second refrigeration circuit 36, to a high pressure level required during circulation of the refrigerant through the first refrigeration circuit 34. Accordingly, during Step 9 the refrigeration system 4 is prepared for cooling of the first compartment 6.

In Table 1 Steps 8 and 10 are illustrated, during which the compressor 16 is switched off and the valve arrangement 32 maintains both the first and second connections 28, 30 to the first and second evaporators 12, 14 closed. The Steps 8 and 10 may be omitted, in which case t_8 and t_10 equal 0 seconds.

The Steps 1 - 7 make up a cooling sequence for the first and second compartments 12, 14 of the refrigeration system 4. Such a cooling sequence has a total duration, t_seq, of t_seq = t_1 + t_2 + t_3 + t_4 + t_5 + t_6 + t_7, wherein t_seq is predetermined and may have a length of between 10 - 100 minutes, e.g. around 60 minutes.

Alternatively, one or more of the Steps 8 - 10 may be included in the cooling sequence. In such case the total duration, t_seq, further includes t_8, and/or t_9, and/or t_10. In this case also relevant of t_8, and/or t_9, and/or t_10 may be seen as part of the third duration and thus, t_8, and/or t_9, and/or t_10 form third time portions.

According to the method first and second requirement variables are formed based on a duration parameter comprising a switch-off duration of the compressor 16. In accordance with the first cooling sequence length definitions above, the duration parameter may comprise Steps 2, 4, and 6 and may have a length of t_2 + t_4 + t_6. Alternatively, the duration parameter may comprise Steps 2, 4, 6, 8, and 10 and may have a length of t_2 + t_4 + t_6 + t_8 + t_10, or the duration parameter may comprise even Step 9, since no refrigerant circulates through any of the first or second refrigeration circuits 34, 36 thus comprising Steps 2, 4, 6, 8, 9, and 10 and having a length of t_2 + t_4 + t_6 + t_8 + t_9 + t_10. As discussed above the duration parameter may comprise also the first and/or second duration, e.g. 1-1 - t_7, t_1 - t_9, or t_1 - t_10.

The length of the first duration (in the example above, t_1 + t_3 + t_5) is determined by the average temperature in the first compartment and may be measured over a predetermined number of cooling sequences. The length of the second duration, (in the example above, t_7) is determined by the average temperature in the second compartment, measured over a predetermined number of cooling sequences.

The length of t_9, for Step 9 may be predetermined and e.g. may be approximately 3 minutes.

The compressor 16 switch-off duration in the above example of Table 1 comprises Steps 2, 4, 6, 8, and 10 and has a length, t_off, of t_off = t_2 + t_4 + t_6 + t_8 + t_10. The length of these steps may be predetermined, for instance:
t_2 = t_4 = t_6 = 0,3 x t_off
t_8 = 0
t_10 = 0,1 x t off
t_off may represent an examples of the third duration.

The method may be varied in many different ways, for instance the first duration may be divided into 1 - 5 first time periods. Furthermore, the second duration may be divided into 1 - 5 second time periods. The first time periods may be followed by the second time periods. First and second time periods may be altered with third time periods.

Example embodiments described above may be combined as understood by a person skilled in the art. It is also understood by those skilled in the art that the first and second refrigeration circuits 34, 36 may comprise a filter. The refrigeration circuits 34, 36 may share a filter or may comprise one filter each. The valve arrangement 32 may comprise a three-way valve, two separate two-way valves, or any other combination of valves that allows the first and second refrigeration circuits 34, 36 to be maintained closed one at a time or both simultaneously. A by-pass conduit may be arranged around the compressor 16 for equalizing the pressure between inlet and outlet sides of the compressor 16 to permit easy staring of a single speed compressor. The by-pass conduit forms an open connection between the inlet and outlet sides at start-up of the compressor 16 and is closed during ordinary running of the compressor. The refrigeration system or compressor may be provided with other means to facilitate start-up of the compressor, e.g. the electric motor driving the compressor, may be provided with a start capacitor and/or a start relay and/or other means to start the compressor under high pressure difference conditions.

Although the invention has been described with reference to example embodiments, many different alterations, modifications and the like will become apparent for those skilled in the art. The refrigeration system may for instance comprise a different expansion arrangement than a capillary tube, such as an expansion valve. The refrigeration system additionally may be controlled according to a different method than disclosed herein, e.g. under certain operating conditions. The first evaporator may comprise a comparatively high thermal mass. Such a first evaporator may be cooled during the first duration and may continue to cool the first compartment also during third durations due to the thermal mass forming a thermal accumulator.

Therefore, it is to be understood that the foregoing is illustrative of various example embodiments and the invention is not to be limited to the specific embodiments disclosed and that modifications to the disclosed embodiments, combinations of features of disclosed embodiments as well as other embodiments are intended to be included as long as such embodiments fall within the scope of the appended claims.

As used herein, the term "comprising" or "comprises" is open-ended, and includes one or more stated features, elements, steps, components or functions but does not preclude the presence or addition of one or more other features, elements, steps, components, functions or groups thereof.

As used herein, the term "and/or" includes any and all combinations of one or more of the associated listed items.

As used herein, the common abbreviation "e.g.", which derives from the Latin phrase "exempli gratia," may be used to introduce or specify a general example or examples of a previously mentioned item, and is not intended to be limiting of such item. If used herein, the common abbreviation "i.e.", which derives from the Latin phrase "id est," may be used to specify a particular item from a more general recitation.

The terminology used herein is for the purpose of describing particular embodiments only and is not intended to be limiting of the invention. As used herein, the singular forms "a", "an" and "the" are intended to include the plural forms as well, unless the context clearly indicates otherwise.

It will be understood that when an element is referred to as being e.g. "coupled" or "connected" to another element, it can be directly coupled or connected to the other element or intervening elements may also be present. In contrast, when an element is referred to as being "directly coupled" or "directly connected" to another element, there are no intervening elements present.

It will be understood that although the terms first, second, third etc. may be used herein to describe various elements, components, regions, layers and/or sections, these elements, components, regions, layers and/or sections should not be limited by these terms. These terms are only used top distinguish one element, component, region, layer or section from another element, component, region, layer or section. Thus, a first element, component, region, layer or section discussed herein could be termed a second element, component, region, layer or section without departing from the teachings of the present invention.

## Claims

1. A method of operating a refrigeration system (4), wherein the refrigeration system (4) comprises:
a first evaporator (12) adapted to be arranged in thermal communication with a first compartment (6) to be cooled, a second evaporator (14) adapted to be arranged in thermal communication with a second compartment (8) to be cooled, a compressor (16), a condenser (18), a valve arrangement (32) adapted to open and close a first connection (28) leading from the condenser (18) to the first evaporator (12) and to open and close a second connection (30) leading from the condenser (16) to the second evaporator (14), a first expansion arrangement (20) arranged in the first connection (28), and a second expansion arrangement (24) arranged in the second connection (30), and wherein in the refrigeration system (4):
a first refrigeration circuit (34) comprises the compressor (16), the condenser (18), the valve arrangement (32), the first expansion arrangement (20), and the first evaporator (12) interconnected by conduits, and
a second refrigeration circuit (36) comprises the compressor (16), the condenser (18), the valve arrangement (32), the second expansion arrangement (24), the second evaporator (14) and a check valve (38) interconnected by conduits, and
wherein the method comprises:
- establishing (100) a first cooling requirement of the first compartment (6) based on the differential between a first set-point temperature and an actual temperature in the first compartment (6) averaged over time,
- establishing (110) a second cooling requirement of the second compartment (8) based on the differential between a second set-point temperature and an actual temperature in the second compartment (8) averaged over time,
- forming (120) a first requirement variable relating to the first cooling requirement of the first compartment (6), the first requirement variable being a first ratio between a switch-on duration of the compressor (16) with refrigerant circulating through the first refrigeration circuit (34) and a duration parameter comprising a switch-off duration of the compressor,
- forming (130) a second requirement variable relating to the second cooling requirement of the second compartment (8), the second requirement variable being a second ratio between a switch-on duration of the compressor (16) with refrigerant circulating through the second refrigeration circuit (36) and the duration parameter comprising the switch-off duration of the compressor,
- establishing (140) a first duration during which the compressor (16) is switched on and refrigerant circulates through the first refrigeration circuit (34) on the basis of the first requirement variable,
- establishing (150) a second duration during which the compressor (16) is switched on and refrigerant circulates through the second refrigeration circuit (36) on the basis of the second requirement variable,
- establishing (160) a third duration during which the compressor (16) is switched off and/or the first and second connections (28, 30) are closed, on the basis of the first and/or second requirement variable,
- switching on (170) and switching off (180) the compressor (16) according to the first, second and third durations,
- maintaining (190) the first connection (28) open and the second connection (30) closed by means of the valve arrangement (32) during the first duration,
- maintaining (200) the second connection (30) open and the first connection (28) closed by means of the valve arrangement (32) during the second duration, and
- maintaining (210) the first and second connections (28, 30) closed by means of the valve arrangement (32) during the third duration.

2. The method according to claim 1, comprising:
- dividing (220) the first duration into at least two first time portions,
- dividing (230) the third duration into at least two third time portions,
- alternating (240) the at least two first time portions with at least one of the at least two third time portions, and
- following (250) one of the at least two third time portions with the second duration.

3. The method according to claim 2, wherein said alternating (240) the at least two first time portions with at least one of the at least two third time portions comprises three steps in sequence:
- switching on (260) the compressor (16) and maintaining the first connection (28) open and the second connection (30) closed by means of the valve arrangement (32) during one of the at least two first time portions,
- switching off (270) the compressor (16) and maintaining the first and second connections (28, 30) closed by means of the valve arrangement (32) during one of the at least two third time portions,
- switching on (280) the compressor (16) and maintaining the first connection (28) open and the second connection (30) closed by means of the valve arrangement (32) during one of the at least two first time portions, and wherein said following (250) one of the at least two third time portions with the second duration comprises two steps in sequence:
- switching off (290) the compressor (16) and maintaining the first and second connections (28, 30) closed by means of the valve arrangement (32) during one of the at least two third time portions, and
- switching on (300) the compressor (16) and maintaining the second connection (30) open and the first connection (28) closed by means of the valve arrangement (32) during the second duration.

4. The method according to any one of the preceding claims, wherein the duration parameter comprising the switch-off duration of the compressor further comprises the first and/or second switch-on durations, and/or a duration during with the first and second connections are closed.

5. The method according to any one of the preceding claims, wherein the refrigeration system (4) comprises the first and second compartments (6, 8) and the compartments (6, 8) are adapted for domestic foodstuff storing.

6. The method according to any one of the preceding claims, wherein the first duration, the second duration, and the third duration collectively have a length of between 10 - 100 minutes.

7. The method according to any one of the preceding claims, wherein the compressor (16) is adapted to provide a cooling capacity of between 10 - 500 W according to ASHRAE LBP or HMBP standard.

8. A refrigerator (2) comprising a first compartment (6) and a second compartments (8) cooled by a refrigeration system (4) controlled by a control system (42), wherein the refrigeration system (4) comprises:
a first evaporator (12) adapted to be arranged in thermal communication with the first compartment (6), a second evaporator (14) adapted to be arranged in thermal communication with the second compartment (8), a compressor (16), a condenser (18), a valve arrangement (32) adapted to open and close a first connection (28) leading from the condenser (18) to the first evaporator (12) and to open and close a second connection (30) leading from the condenser (18) to the second evaporator (14), a first expansion arrangement (22) arranged in the first connection (28), and a second expansion arrangement (24) arranged in the second connection (30), and
wherein in the refrigeration system (4):
a first refrigeration circuit (34) comprises the compressor, the condenser, the valve arrangement, the first expansion arrangement, and the first evaporator interconnected by conduits, and
a second refrigeration circuit comprises the compressor, the condenser, the valve arrangement, the second expansion arrangement, the second evaporator and a check valve interconnected by conduits,
**characterized in that** the control system (26) is adapted:
- to establish a first cooling requirement of the first compartment (6) based on the differential between a first set-point temperature and an actual temperature in the first compartment (6) averaged over time,
- to establish a second cooling requirement of the second compartment (8) based on the differential between a second set-point temperature and an actual temperature in the second compartment averaged over time,
- to forming a first requirement variable relating to the first cooling requirement of the first compartment (6), the first requirement variable being a first ratio between a switch-on duration of the compressor (16) with refrigerant circulating through the first refrigeration circuit and a duration parameter comprising a switch-off duration of the compressor,
- to form a second requirement variable relating to the second cooling requirement of the second compartment, the second requirement variable being a second ratio between a switch-on duration of the compressor (16) with refrigerant circulating through the second refrigeration circuit and the duration parameter comprising the switch-off duration of the compressor,
- to establish a first duration during which the compressor (16) is switched on and refrigerant circulates through the first refrigeration circuit on the basis of the first requirement variable,
- to establish a second duration during which the compressor (16) is switched on and refrigerant circulates through the second refrigeration circuit on the basis of the second requirement variable,
- to establish a third duration during which the compressor (16) is switched off and/or the first and second connections (28, 30) are closed, on the basis of the first and/or
second requirement variable, and
- to switch on and switch off the compressor (16) according to the first, second and third durations,
- to maintain the first connection open and the second connection closed by means of the valve arrangement during the first duration,
- to maintain the second connection open and the first connection closed by means of the valve arrangement during the second duration, and
- to maintain the first and second connections closed by means of the valve arrangement during the third duration.

9. The refrigerator according to claim 8, wherein the first compartment (6) is adapted for refrigerated domestic foodstuff storing at a temperature above 0 degrees Celsius and the second compartment (8) is adapted for refrigerated domestic foodstuff storing at a refrigerated temperature below 0 degrees Celsius.

10. The refrigerator according to claim 8 or 9, wherein the compressor (16) is a single speed compressor adapted to run at a constant speed during the first duration and the second duration.

11. The refrigerator according to claim 8 or 9, wherein the compressor (16) is a variable speed compressor adapted to run at variable speed during the first duration and the second duration.

## Patentansprüche

1. Verfahren zum Betrieb eines Kühlsystems (4), wobei das Kühlsystem (4) Folgendes umfasst:
einen ersten Verdampfer (12), der dafür geeignet ist, in thermischer Verbindung mit einem ersten Fach (6), das zu kühlen ist, angeordnet zu sein, einen zweiten Verdampfer (14), der dafür geeignet ist, in thermischer Verbindung mit einem zweiten Fach (8), das zu kühlen ist, angeordnet zu sein, einen Kompressor (16), einen Kondensator (18), eine Ventilanordnung (32), die dafür geeignet ist, eine erste Verbindung (28) zu öffnen und zu schließen, die von dem Kondensator (18) zu dem ersten Verdampfer (12) führt, und eine zweite Verbindung (30) zu öffnen und zu schließen, die von dem Kondensator (16) zu dem zweiten Verdampfer (14) führt, eine erste Expansionsanordnung (20), die in der ersten Verbindung (28) angeordnet ist, und eine zweite Expansionsanordnung (24), die in der zweiten Verbindung (30) angeordnet ist, und wobei in dem Kühlsystem (4):
ein erster Kühlkreislauf (34) den Kompressor (16), den Kondensator (18), die Ventilanordnung (32), die erste Expansionsanordnung (20) und den ersten Verdampfer (12) umfasst, die durch Leitungen miteinander verbunden sind, und
ein zweiter Kühlkreislauf (36) den Kompressor (16), den Kondensator (18), die Ventilanordnung (32), die zweite Expansionsanordnung (24) den zweiten Verdampfer (14) und ein Absperrventil (38) umfasst, die durch Leitungen miteinander verbunden sind, und wobei das Verfahren Folgendes umfasst:
- Festlegen (100) einer ersten Kühlanforderung des ersten Fachs (6) auf Grundlage des Gefälles zwischen einer ersten Solltemperatur und einer Ist-Temperatur in dem ersten Fach (6), das über die Zeit gemittelt wird,
- Festlegen (110) einer zweiten Kühlanforderung des zweiten Fachs (8) auf Grundlage des Gefälles zwischen einer zweiten Solltemperatur und einer Ist-Temperatur in dem zweiten Fach (8), das über die Zeit gemittelt wird,
- Bilden (120) einer ersten Anforderungsvariablen in Bezug auf die erste Kühlanforderung des ersten Fachs (6), wobei die erste Anforderungsvariable ein erstes Verhältnis zwischen einer Einschaltdauer des Kompressors (16) mit Kältemittel, das durch den ersten Kühlkreislauf (34) strömt, und einem Dauerparameter, der eine Ausschaltdauer des Kompressors umfasst, ist,
- Bilden (130) einer zweiten Anforderungsvariablen in Bezug auf die zweite Kühlanforderung des zweiten Fachs (8), wobei die zweite Anforderungsvariable ein zweites Verhältnis zwischen einer Einschaltdauer des Kompressors (16) mit Kältemittel, das durch den zweiten Kühlkreislauf (36) strömt, und dem Dauerparameter, der die Ausschaltdauer des Kompressors umfasst, ist,
- Festlegen (140) einer ersten Dauer, während welcher der Kompressor (16) eingeschaltet ist und Kältemittel durch den ersten Kühlkreislauf (34) strömt, auf der Grundlage der ersten Anforderungsvariablen,
- Festlegen (150) einer zweiten Dauer, während welcher der Kompressor (16) eingeschaltet ist und Kältemittel durch den zweiten Kühlkreislauf (36) strömt, auf der Grundlage der zweiten Anforderungsvariablen,
- Festlegen (160) einer dritten Dauer, während welcher der Kompressor (16) ausgeschaltet ist und/oder die erste und die zweite Verbindung (28, 30) geschlossen sind, auf der Grundlage der ersten und/oder zweiten Anforderungsvariablen,
- Einschalten (170) und Ausschalten (180) des Kompressors (16) gemäß der ersten, zweiten und dritten Dauer,
- Offenhalten (190) der ersten Verbindung (28) und Geschlossenhalten der zweiten Verbindung (30) mittels der Ventilanordnung (32) während der ersten Dauer,
- Offenhalten (200) der zweiten Verbindung (30) und Geschlossenhalten der ersten Verbindung (28) mittels der Ventilanordnung (32) während der zweiten Dauer, und
- Geschlossenhalten (210) der ersten und der zweiten Verbindung (28, 30) mittels der Ventilanordnung (32) während der dritten Dauer.

2. Verfahren nach Anspruch 1, umfassend:
- Teilen (220) der ersten Dauer in mindestens zwei Zeitabschnitte,
- Teilen (230) der dritten Dauer in mindestens zwei dritte Zeitabschnitte,
- Abwechseln (240) der mindestens zwei Zeitabschnitte mit mindestens einem von den mindestens zwei dritten Zeitabschnitten, und
- Folgen (250) eines der mindestens zwei dritten Zeitabschnitte mit der zweiten Dauer.

3. Verfahren nach Anspruch 2, wobei das Abwechseln (240) der mindestens zwei ersten Zeitabschnitte mit mindestens einem von den mindestens zwei dritten Zeitabschnitten drei Schritte nacheinander umfasst:
- Einschalten (260) des Kompressors (16) und Offenhalten der ersten Verbindung (28) und Geschlossenhalten der zweiten Verbindung (30) mittels der Ventilanordnung (32) während eines der mindestens zwei ersten Zeitabschnitte,
- Ausschalten (270) des Kompressors (16) und Geschlossenhalten der ersten und zweiten Verbindung (28, 30) mittels der Ventilanordnung (32) während eines der mindestens zwei dritten Zeitabschnitte,
- Einschalten (280) des Kompressors (16) und Offenhalten der ersten Verbindung (28) und Geschlossenhalten der zweiten Verbindung (30) mittels der Ventilanordnung (32) während eines der mindestens zwei ersten Zeitabschnitte, und wobei der folgende (250) eine der mindestens zwei dritten Zeitabschnitte mit der zweiten Dauer zwei Schritte nacheinander umfasst:
- Ausschalten (290) des Kompressors (16) und Geschlossenhalten der ersten und zweiten Verbindung (28, 30) mittels der Ventilanordnung (32) während eines der mindestens zwei dritten Zeitabschnitte, und
- Einschalten (300) des Kompressors (16) und Offenhalten der zweiten Verbindung (30) und Geschlossenhalten der ersten Verbindung (28) mittels der Ventilanordnung (32) während der zweiten Dauer.

4. Verfahren nach einem der vorhergehenden Ansprüche, wobei der Dauerparameter, der die Ausschaltdauer des Kompressors umfasst, ferner die erste und/oder zweite Einschaltdauer und/oder eine Dauer, während der die erste und die zweite Verbindung geschlossen sind, umfasst.

5. Verfahren nach einem der vorhergehenden Ansprüche, wobei das Kühlsystem (4) das erste und das zweite Fach (6, 8) umfasst und die Fächer (6, 8) für die Lagerung häuslicher Lebensmittel geeignet sind.

6. Verfahren nach einem der vorhergehenden Ansprüche, wobei die erste Dauer, die zweite Dauer und die dritte Dauer zusammen eine Länge zwischen 10 - 100 Minuten aufweisen.

7. Verfahren nach einem der vorhergehenden Ansprüche, wobei der Kompressor (16) dafür geeignet ist, eine Kühlkapazität zwischen 10 - 500 W gemäß der Norm ASHRAE LBP oder HMBP bereitzustellen.

8. Kühlgerät (2) umfassend ein erstes Fach (6) und ein zweites Fach (8), die durch ein Kühlsystem (4) gekühlt werden, das durch ein Steuerungssystem (42) gesteuert wird, wobei das Kühlsystem (4) Folgendes umfasst:
einen ersten Verdampfer (12), der dafür geeignet ist, in thermischer Verbindung mit dem ersten Fach (6) angeordnet zu sein, einen zweiten Verdampfer (14), der dafür geeignet ist, in thermischer Verbindung mit dem zweiten Fach (8) angeordnet zu sein, einen Kompressor (16), einen Kondensator (18), eine Ventilanordnung (32), die dafür geeignet ist, eine erste Verbindung (28) zu öffnen und
zu schließen, die von dem Kondensator (18) zu dem ersten Verdampfer (12) führt, und eine zweite Verbindung (30) zu öffnen und zu schließen, die von dem Kondensator (18) zu dem zweiten Verdampfer (14) führt, eine erste Expansionsanordnung (22), die in der ersten Verbindung (28) angeordnet ist, und eine zweite Expansionsanordnung (24), die in der zweiten Verbindung (30) angeordnet ist, und wobei in dem Kühlsystem (4):
ein erster Kühlkreislauf (34) den Kompressor, den Kondensator, die Ventilanordnung, die erste Expansionsanordnung und den ersten Verdampfer umfasst, die durch Leitungen miteinander verbunden sind, und
ein zweiter Kühlkreislauf den Kompressor, den Kondensator, die Ventilanordnung, die zweite Expansionsanordnung, den zweiten Verdampfer und ein Absperrventil umfasst, die durch Leitungen miteinander verbunden sind,
**dadurch gekennzeichnet, dass** das Steuerungssystem (26) dafür geeignet ist:
- eine erste Kühlanforderung des ersten Fachs (6) auf Grundlage des Gefälles zwischen einer ersten Solltemperatur und einer Ist-Temperatur in dem ersten Fach (6), das über die Zeit gemittelt wird, festzulegen,
- eine zweite Kühlanforderung des zweiten Fachs (8) auf Grundlage des Gefälles zwischen einer zweiten Solltemperatur und einer Ist-Temperatur in dem zweiten Fach, das über die Zeit gemittelt wird, festzulegen,
- eine erste Anforderungsvariable in Bezug auf die erste Kühlanforderung des ersten Fachs (6) zu bilden, wobei die erste Anforderungsvariable ein erstes Verhältnis zwischen einer Einschaltdauer des Kompressors (16) mit Kältemittel, das durch den ersten Kühlkreislauf strömt, und einem Dauerparameter, der eine Ausschaltdauer des Kompressors umfasst, ist,
- eine zweite Anforderungsvariablen in Bezug auf die zweite Kühlanforderung des zweiten Fachs zu bilden, wobei die zweite Anforderungsvariable ein zweites Verhältnis zwischen einer Einschaltdauer des Kompressors (16) mit Kältemittel, das durch den zweiten Kühlkreislauf strömt, und dem Dauerparameter, der die Ausschaltdauer des Kompressors umfasst, ist,
- eine erste Dauer, während welcher der Kompressor (16) eingeschaltet ist und Kältemittel durch den ersten Kühlkreislauf strömt, auf der Grundlage der ersten Anforderungsvariablen festzulegen,
- eine zweite Dauer, während welcher der Kompressor (16) eingeschaltet ist und Kältemittel durch den zweiten Kühlkreislauf strömt, auf der Grundlage der zweiten Anforderungsvariablen festzulegen,
- eine dritte Dauer, während welcher der Kompressor (16) ausgeschaltet ist und/oder die erste und die zweite Verbindung (28, 30) geschlossen sind, auf der Grundlage der ersten und/oder zweiten Anforderungsvariablen festzulegen, und
- den Kompressor (16) gemäß der ersten, zweiten und dritten Dauer einzuschalten und auszuschalten,
- mittels der Ventilanordnung während der ersten Dauer die erste Verbindung offenzuhalten und die zweite Verbindung geschlossenzuhalten,
- mittels der Ventilanordnung während der zweiten Dauer die zweite Verbindung offenzuhalten und die erste Verbindung geschlossenzuhalten, und
- mittels der Ventilanordnung während der dritten Dauer die erste und die zweite Verbindung geschlossenzuhalten.

9. Kühlgerät nach Anspruch 8, wobei das erste Fach (6) für die Lagerung gekühlter häuslicher Lebensmittel bei einer Temperatur über 0 Grad Celsius geeignet ist und das zweite Fach (8) für die Lagerung gekühlter häuslicher Lebensmittel bei einer gekühlten Temperatur unter 0 Grad Celsius geeignet ist.

10. Kühlgerät nach Anspruch 8 oder 9, wobei der Kompressor (16) ein Einzeldrehzahlkompressor ist, der dafür geeignet ist, während der ersten Dauer und der zweiten Dauer mit einer konstanten Drehzahl zu laufen.

11. Kühlgerät nach Anspruch 8 oder 9, wobei der Kompressor (16) ein Kompressor mit variabler Drehzahl ist, der dafür geeignet ist, während der ersten Dauer und der zweiten Dauer mit einer variablen Drehzahl zu laufen.

## Revendications

1. Procédé de commande d'un système de réfrigération (4), dans lequel le système de réfrigération (4) comprend :
un premier évaporateur (12) adapté pour être agencé en communication thermique avec un premier compartiment (6) à refroidir, un second évaporateur (14) adapté pour être agencé en communication thermique avec un second compartiment (8) à refroidir, un compresseur (16), un condenseur (18), un système de vannes (32) adapté pour ouvrir et fermer une première connexion (28) menant du condenseur (18) au premier évaporateur (12) et pour ouvrir et fermer une seconde connexion (30) menant du condenseur (16) au second évaporateur (14), un premier système de dilatation (20) agencé dans la première connexion (28), et un second système de dilatation (24) agencé dans la seconde connexion (30), le système de réfrigération (4) comprenant :
un premier circuit de réfrigération (34) comportant le compresseur (16), le condenseur (18), le système de vannes (32), le premier système de dilatation (20) et le premier évaporateur (12) interconnectés par des conduites, et
un second circuit de réfrigération (36) comportant le compresseur (16), le condenseur (18), le système de vannes (32), le second système de dilatation (24), le second évaporateur (14) et un clapet anti-retour (38) interconnectés par des conduites, et
le procédé consistant à :
- établir (100) une première exigence de refroidissement du premier compartiment (6) sur la base de la différence entre une première température de consigne et une température réelle dans le premier compartiment (6) moyennée dans le temps,
- établir (110) une seconde exigence de refroidissement du second compartiment (8) sur la base de la différence entre une seconde température de consigne et une température réelle dans le second compartiment (8) moyennée dans le temps,
- former (120) une première variable d'exigence relative à la première exigence de refroidissement du premier compartiment (6), la première variable d'exigence étant un premier rapport entre une durée de mise en marche du compresseur (16) avec circulation du réfrigérant à travers le premier circuit de réfrigération (34) et un paramètre de durée comprenant une durée de mise à l'arrêt du compresseur,
- former (130) une seconde variable d'exigence relative à la seconde exigence de refroidissement du second compartiment (8), la seconde variable d'exigence étant un second rapport entre une durée de mise en marche du compresseur (16) avec circulation du réfrigérant à travers le second circuit de réfrigération (36) et le paramètre de durée comprenant une durée de mise à l'arrêt du compresseur,
- établir (140) une première durée pendant laquelle le compresseur (16) est mis en marche et le réfrigérant circule dans le premier circuit de réfrigération (34) sur la base de la première variable d'exigence,
- établir (150) une deuxième durée pendant laquelle le compresseur (16) est mis en marche et le réfrigérant circule dans le second circuit de réfrigération (36) sur la base de la seconde variable d'exigence,
- établir (160) une troisième durée pendant laquelle le compresseur (16) est mis à l'arrêt et/ou les première et seconde connexions (28, 30) sont fermées, sur la base de la première et/ou de la seconde variable d'exigence,
- mettre le compresseur (16) en marche (170) et à l'arrêt (180) selon les première, deuxième et troisième durées,
- maintenir (190) la première connexion (28) ouverte et la seconde connexion (30) fermée au moyen du système de vannes (32) pendant la première durée,
- maintenir (200) la seconde connexion (30) ouverte et la première connexion (28) fermée au moyen du système de vannes (32) pendant la deuxième durée, et
- maintenir (210) les première et seconde connexions (28, 30) fermées au moyen du système de vannes (32) pendant la troisième durée.

2. Procédé selon la revendication 1, consistant en outre à :
- diviser (220) la première durée en au moins deux premières parties de temps,
- diviser (230) la troisième durée en au moins deux troisièmes parties de temps,
- faire alterner (240) les au moins deux premières parties de temps avec au moins l'une des au moins deux troisièmes parties de temps, et
- faire suivre (250) l'une des au moins deux troisièmes parties de temps de la deuxième durée.

3. Procédé selon la revendication 2, dans lequel ladite alternance (240) des au moins deux premières parties de temps avec au moins l'une des au moins deux troisièmes parties de temps comprend trois étapes en séquence :
- la mise en marche (260) du compresseur (16) et le maintien de la première connexion (28) ouverte et de la seconde connexion (30) fermée au moyen du système de vannes (32) pendant l'une des au moins deux premières parties de temps,
- la mise à l'arrêt (270) du compresseur (16) et le maintien des première et seconde connexions (28, 30) fermées au moyen du système de vannes (32) pendant l'une des au moins deux troisièmes parties de temps,
- la mise en marche (280) du compresseur (16) et le maintien de la première connexion (28) ouverte et de la seconde connexion (30) fermée au moyen du système de vannes (32) pendant l'une des au moins deux premières parties de temps, l'étape consistant à faire suivre (250) l'une des au moins deux troisièmes parties de temps de la deuxième durée comprenant deux étapes en séquence :
- la mise à l'arrêt (290) du compresseur (16) et le maintien des première et seconde connexions (28, 30) fermées au moyen du système de vannes (32) pendant l'une des au moins deux troisièmes parties de temps, et
- la mise en marche (300) du compresseur (16) et le maintien de la seconde connexion (30) ouverte et de la première connexion (28) fermée au moyen du système de vannes (32) pendant la deuxième durée.

4. Procédé selon l'une quelconque des revendications précédentes, dans lequel le paramètre de durée comprenant la durée de mise à l'arrêt du compresseur comprend en outre la première et/ou la deuxième durée de mise en marche, et/ou une durée pendant laquelle les première et seconde connexions sont fermées.

5. Procédé selon l'une quelconque des revendications précédentes, dans lequel le système de réfrigération (4) comprend les premier et second compartiments (6, 8) et les compartiments (6, 8) sont adaptés pour le stockage de produits alimentaires domestiques.

6. Procédé selon l'une quelconque des revendications précédentes, dans lequel la première durée, la deuxième durée et la troisième durée ont collectivement une durée comprise entre 10 et 100 minutes.

7. Procédé selon l'une quelconque des revendications précédentes, dans lequel le compresseur (16) est adapté pour fournir une capacité de refroidissement comprise entre 10 et 500 W selon la norme ASHRAE LBP ou HMBP.

8. Réfrigérateur (2) comprenant un premier compartiment (6) et un second compartiment (8) refroidis par un système de réfrigération (4) commandé par un système de commande (42), le système de réfrigération (4) comprenant :
un premier évaporateur (12) adapté pour être agencé en communication thermique avec le premier compartiment (6), un second évaporateur (14) adapté pour être agencé en communication thermique avec le second compartiment (8), un compresseur (16), un condenseur (18), un système de vannes (32) adapté pour ouvrir et fermer une première connexion (28) menant du condenseur (18) au premier évaporateur (12) et pour ouvrir et fermer une seconde connexion (30) menant du condenseur (18) au second évaporateur (14), un premier système de dilatation (22) agencé dans la première connexion (28), et un second système de dilatation (24) agencé dans la seconde connexion (30), et
le système de réfrigération (4) comprenant :
un premier circuit de réfrigération (34) comportant le compresseur, le condenseur, le système de vannes, le premier système de dilatation et le premier évaporateur interconnectés par des conduites, et
un second circuit de réfrigération comportant le compresseur, le condenseur, le système de vannes, le second système de dilatation, le second évaporateur et un clapet anti-retour interconnectés par des conduites,
**caractérisé en ce que** le système de commande (26) est adapté :
- pour établir une première exigence de refroidissement du premier compartiment (6) sur la base de la différence entre une première température de consigne et une température réelle dans le premier compartiment (6) moyennée dans le temps,
- pour établir une seconde exigence de refroidissement du second compartiment (8) sur la base de la différence entre une seconde température de consigne et une température réelle dans le second compartiment moyennée dans le temps,
- pour former une première variable d'exigence relative à la première exigence de refroidissement du premier compartiment (6), la première variable d'exigence étant un premier rapport entre une durée de mise en marche du compresseur (16) avec circulation du réfrigérant à travers le premier circuit de réfrigération et un paramètre de durée comprenant une durée de mise à l'arrêt du compresseur,
- pour former une seconde variable d'exigence relative à la seconde exigence de refroidissement du second compartiment, la seconde variable d'exigence étant un second rapport entre une durée de mise en marche du compresseur (16) avec circulation du réfrigérant à travers le second circuit de réfrigération et la paramètre de durée comprenant la durée de mise à l'arrêt du compresseur,
- pour établir une première durée pendant laquelle le compresseur (16) est mis en marche et le réfrigérant circule dans le premier circuit de réfrigération sur la base de la première variable d'exigence,
- pour établir une seconde durée pendant laquelle le compresseur (16) est mis en marche et le réfrigérant circule dans le second circuit de réfrigération sur la base de la seconde variable d'exigence,
- pour établir une troisième durée pendant laquelle le compresseur (16) est mis à l'arrêt et/ou les première et seconde connexions (28, 30) sont fermées, sur la base de la première et/ou de la seconde variable d'exigence, et
- pour mettre le compresseur (16) en marche et à l'arrêt selon les première, deuxième et troisième durées,
- pour maintenir la première connexion ouverte et la seconde connexion fermée au moyen du système de vannes pendant la première durée,
- pour maintenir la seconde connexion ouverte et la première connexion fermée au moyen du système de vannes pendant la deuxième durée, et
- pour maintenir les première et seconde connexions fermées au moyen du système de vannes pendant la troisième durée.

9. Réfrigérateur selon la revendication 8, dans lequel le premier compartiment (6) est adapté pour le stockage de produits alimentaires domestiques réfrigérés à une température supérieure à 0 degré Celsius et le second compartiment (8) est adapté pour le stockage de produits alimentaires domestiques réfrigérés à une température inférieure à 0 degré Celsius.

10. Réfrigérateur selon la revendication 8 ou 9, dans lequel le compresseur (16) est un compresseur à vitesse unique adapté pour fonctionner à une vitesse constante pendant la première durée et la deuxième durée.

11. Réfrigérateur selon la revendication 8 ou 9, dans lequel le compresseur (16) est un compresseur à vitesse variable adapté pour fonctionner à vitesse variable pendant la première durée et la deuxième durée.
